# EUROPÄISCHE PATENTANMELDUNG

(11) **EP 2 787 365 A1**
(43) Veröffentlichungstag der Anmeldung: **08.10.2014**
(21) Anmeldenummer: 14159081.0
(22) Anmeldetag: 12.03.2014
(51) Int. Cl.: G01S 7/481, G01S 17/48

(54) **Triangulationslichttaster**

(30) Priorität: 02.04.2013 DE 102013205801
(71) Anmelder: SICK AG, 79183 Waldkirch/Breisgau (DE)
(72) Erfinder: Spreemann, Dirk, Dr., 79244 Münstertal (DE); Wiethege, Friedhelm, 79350 Sexau (DE); Merettig, Gerhard, 79350 Sexau (DE)
(74) Vertreter: Manitz, Finsterwald & Partner GbR

(57) **Zusammenfassung**

Die vorliegende Erfindung betrifft einen Triangulationslichttaster mit wenigstens einem Lichtsender zum Aussenden von Sendelicht in eine Detektionszone, einem Lichtempfänger, welcher mehrere Empfängerelemente aufweist, zum Empfangen von Licht aus der Detektionszone, welches von einem zu detektierenden Objekt remittiert wird, und einer Empfangsoptik, die im Strahlengang zwischen Detektionszone und Lichtempfänger angeordnet ist, wobei sich die Position eines mittels der Empfangsoptik aus dem remittierten Licht auf den Lichtempfänger erzeugten Lichtflecks in einer Triangulationsrichtung in Abhängigkeit von der Entfernung des Objekts ergibt. Der erfindungsgemäße Lichttaster ist dadurch gekennzeichnet, dass die Empfangsoptik wenigstens ein erstes und ein wenigstens ein zweites Abbildungselement umfasst, wobei jedes Abbildungselement eine jeweilige Brennweite aufweist und in einer jeweiligen Distanz von dem Lichtempfänger angeordnet ist, wobei jedes Abbildungselement ein Teil des remittierten Lichts in einen jeweiligen Brennpunkt fokussiert, und wobei die Brennweiten und/oder die Distanzen derart gewählt sind, dass der Lichtempfänger in der Ausbreitungsrichtung des remittierten Lichts betrachtet zumindest dann zwischen den Brennpunkten gelegen ist, wenn sich das Objekt innerhalb eines vorgegebenen Entfernungsbereichs befindet.

## Beschreibung

Die vorliegende Erfindung betrifft einen Triangulationslichttaster mit wenigstens einem Lichtsender zum Aussenden von Sendelicht in eine Detektionszone, einem Lichtempfänger, welcher mehrere Empfängerelemente aufweist, zum Empfangen von Licht aus der Detektionszone, welches von einem zu detektierenden Objekt remittiert wird, und einer Empfangsoptik, die im Strahlengang zwischen Detektionszone und Lichtempfänger angeordnet ist, wobei sich die Position eines mittels der Empfangsoptik aus dem remittierten Licht auf dem Lichtempfänger erzeugten Lichtflecks in einer Triangulationsrichtung in Abhängigkeit von der Entfernung des Objekts ergibt.

Es ist bekannt, die Entfernung von Gegenständen in einem Überwachungsbereich mit Lichttastern zu bestimmen, die nach dem Triangulationsprinzip arbeiten. Ein derartiger Lichttaster umfasst einen Lichtsender, beispielsweise eine Leuchtdiode oder einen Laser, und gegebenenfalls eine Sendeoptik, um einen Sendelichtstrahl in eine Detektionszone zu einem dort gegebenenfalls befindlichen, zu detektierenden Objekt auszusenden. Das Sendelicht kann von einem solchen Objekt remittiert, d.h. diffus oder spiegelnd reflektiert, und von einem Lichtempfänger detektiert werden, der zusammen mit einer Empfangsoptik eine Empfangseinheit bildet. Der Lichtempfänger besteht bei bekannten Lösungen aus wenigstens einer Zeile von fotosensitiven Empfängerelementen.

In Abhängigkeit von der Entfernung zwischen dem Triangulationslichttaster und dem remittierenden Objekt ändert sich die Position eines durch das remittierte Licht erzeugten Lichtflecks auf dem Lichtempfänger in der sogenannten Triangulationsrichtung. Zwischen dem Auftreffpunkt auf dem Lichtempfänger und der Entfernung des erfassten Objekts besteht ein eindeutiger geometrischer Zusammenhang. Durch Auswertung der Lichtverteilung auf dem Lichtempfänger kann damit die Entfernung zwischen Objekt und Lichttaster bestimmt werden. Weiterhin kann bei entsprechender Auswertung der Lichtverteilung auf dem Lichtempfänger bestimmt werden, ob sich ein Objekt innerhalb oder außerhalb eines Tastbereichs befindet, d.h. ob die Entfernung des Objekts innerhalb oder außerhalb vorbestimmter Grenzen liegt.

Um insbesondere eine hohe Genauigkeit bei der Entfernungsbestimmung zu erreichen, muss ein solcher Lichtempfänger eine Vielzahl fotosensitiver Empfängerelemente aufweisen, die in der Triangulationsrichtung nebeneinander angeordnet sind.

Es ist daher wünschenswert, wenn die Position des Lichtflecks auf den Lichtempfänger mit einer Genauigkeit bestimmt werden kann, die nicht durch die minimale Größe der Empfängerelemente begrenzt ist.

Dies kann beispielsweise dadurch erreicht werden, das die Größe der einzelnen Empfängerelemente und die Größe des Lichtflecks so aneinander angepasst werden, dass der Lichtfleck mindestens drei benachbarte Empfängerelemente trifft und durch geeignete Auswertung der Signale die Position des Schwerpunkts ermittelt wird, wie es beispielsweise in EP 1 111 332 B1 beschrieben ist. Diese Bedingung wird auch als "Drei-Elemente-Kriterium" bezeichnet.

Falls das zu detektierende Objekt am Auftreffort des vom Lichtsender ausgesandten Sendelichts einen großen Hell-Dunkel-Kontrastunterschied aufweist, wird dieser Kontrastverlauf auf den Lichtempfänger abgebildet. Dies führt dazu, dass der Schwerpunkt der Intensitätsverteilung des Lichtflecks unter Umständen nicht mehr in der geometrischen Mitte des Lichtflecks liegt. Somit werden die helleren Bereiche höher gewichtet, was zu einer fehlerhaften Abstandsbestimmung führen kann.

Im Stand der Technik sind verschiedene Ansätze beschrieben, mit denen eine fehlerhafte Erfassung von Objekten, die große Kontrastunterschiede innerhalb des Lichtflecks verursachen, vermieden werden soll. So schlägt DE 37 29 334 C2 einen Lichttaster vor, welcher über zwei vollständige Empfangszweige verfügt. Dies führt jedoch zu einem erhöhten Platzbedarf und hohen Herstellungskosten. In DE 10 2004 009 484 A1 wird vorgeschlagen, als Empfangsoptik eine Sammellinse zu verwenden, auf deren einer Hauptfläche mehrere Zylinderlinsensegmente angeordnet sind, was jedoch die Komplexität der Empfangsoptik und die Anforderungen an ihre Herstellung vergrößert.

Es ist daher die Aufgabe der vorliegenden Erfindung, einen Triangulationslichttaster anzugeben, welcher unempfindlich gegenüber Kontrastunterschieden auf dem zu detektierenden Objekt ist.

Die Lösung der Aufgabe erfolgt durch einen Triangulationslichttaster mit den Merkmalen des Anspruchs 1. Erfindungsgemäß ist vorgesehen, dass die Empfangsoptik wenigstens ein erstes und wenigstens ein zweites Abbildungselement umfasst, wobei jedes Abbildungselement eine jeweilige Brennweite aufweist und in einer jeweiligen Distanz von dem Lichtempfänger angeordnet ist, wobei jedes Abbildungselement einen Teil des remittierten Lichts in einen jeweiligen Brennpunkt fokussiert, und wobei die Brennweiten und/oder die Distanzen derart gewählt sind, dass der Lichtempfänger in der Ausbreitungsrichtung des remittierten Lichts betrachtet zumindest dann zwischen den Brennpunkten der zwei Abbildungselemente gelegen ist, wenn sich das Objekt innerhalb eines vorgegebenen Entfernungsbereichs befindet. Bei dem erfindungsgemäßen Triangulationslichttaster bildet somit jedes Abbildungselement eine Teilapertur der Empfangsoptik und erzeugt einen jeweiligen Teillichtfleck, wobei sich die Teillichtflecke vollständig oder teilweise überlagern oder auch unmittelbar aneinander angrenzen können. Da sich der Lichtempfänger zwischen den Brennpunkten befindet, werden die Teillichtflecke mit einer gewissen Unschärfe auf den Lichtempfänger abgebildet. Auf die Ebene des Lichtempfängers bezogen befindet sich demnach ein Teillichtfleck im Überfokus und der andere Teillichtfleck im Unterfokus. Zumindest für den vorgegebenen Entfernungsbereich des remittierenden Objekts wird dadurch erreicht, dass der eine Teillichtfleck im Vergleich zu dem anderen Teillichtfleck gespiegelt auf dem Lichtempfänger abgebildet wird. Dadurch kann ein objektbedingter Kontrastunterschied innerhalb des Gesamtlichtflecks kompensiert werden.

Die Abbildungselemente werden zum Beispiel, bezogen auf eine quer zur Ausbreitungsrichtung des remittierten Lichts verlaufende Ebene nebeneinander angeordnet, wobei die Richtung, in welcher die Abbildungselemente nebeneinander angeordnet sind, grundsätzlich beliebig ist. Bevorzugt verläuft diese Richtung jedoch quer zur Triangulationsrichtung, da dann ein Kontrastunterschied im Lichtfleck, der ebenfalls in Triangulationsrichtung verläuft und somit ohne entsprechende Maßnahmen zu einer Schwerpunktverschiebung in Triangulationsrichtung führen würde, besonders gut kompensiert werden kann. Eine weitere Möglichkeit besteht darin, die Abbildungselemente konzentrisch zueinander anzuordnen.

Gemäß einer vorteilhaften Ausführungsform sind die Brennweiten und/oder die Distanzen derart gewählt, dass zumindest einer der von einem jeweiligen Abbildungselement erzeugten Teillichtflecke wenigstens drei Empfängerelemente überdeckt, wenn sich das Objekt innerhalb des vorgegebenen Entfernungsbereichs befindet. Damit wird der Tatsache Rechnung getragen, dass die Teillichtflecke in der Regel nur bei einer bestimmten Objektentfernung gleich groß sind und bei größeren oder kleineren Objektentfernungen eine unterschiedliche Größe aufweisen. Durch eine entsprechende Auslegung der Brennweiten und/oder Distanzen wird erreicht, dass zumindest einer der Teillichtflecke das eingangs erwähnte Drei-Elemente-Kriterium erfüllt. Je nach der Größe des vorgegebenen Entfernungsbereichs, d.h. des Tastweitenbereichs, wird jedoch angestrebt, dass beide Teillichtflecke dieses Drei-Elemente-Kriterium zumindest über einen Großteil des Tastweitenbereichs erfüllen.

Gemäß einer vorteilhaften Ausführungsform ist jedes Abbildungselement durch ein jeweiliges Segment einer eine optische Achse aufweisenden Sammellinse gebildet, wobei die Segmente derart zueinander angeordnet sind, dass ihre optischen Achsen einander zugewandt sind, insbesondere zusammenfallen. Die Segmente lassen sich beispielsweise dadurch erzeugen, dass zwei Sammellinsen unterschiedlicher Brennweite geteilt, insbesondere halbiert, werden, wobei die jeweiligen Trennebenen parallel zur optischen Achse verlaufen und insbesondere mit dieser zusammenfallen. Ein Segment der einen Sammellinse wird dann mit einem Segment der anderen Sammellinse so zusammengesetzt, dass die jeweiligen Trennebenen einander zugewandt sind oder sich berühren. Das auf diese Weise zusammengesetzte Abbildungselement weist näherungsweise wiederum die Gestalt einer Sammellinse auf.

Die beiden Segmente können so zusammengesetzt werden, dass diese, beispielsweise bezogen auf eine jeweilige Hauptebene, einen Versatz in Richtung der optischen Achse aufweisen oder auch versatzfrei angeordnet sind.

Weiterhin kann auch eine einzige Sammellinse parallel zur optischen Achse geteilt werden und die beiden Segmente in der beschriebenen Weise mit einem Versatz in Richtung der optischen Achse wieder zusammengesetzt werden.

Auf diese Weise können Empfangsoptiken geschaffen werden, bei denen sich die die Abbildungselemente bildenden Segmente nur bezüglich ihrer Brennweite, nur bezüglich ihrer Distanz von dem Lichtempfänger oder bezüglich ihrer Brennweite und ihrer Distanz voneinander unterscheiden.

Gemäß einer alternativen Ausführungsform kann die Empfangsoptik ein Mikrolinsenarray mit einer Vielzahl von Mikrolinsen umfassen.

Hierbei kann ein Teil der Mikrolinsen als erste Abbildungselemente und ein anderer Teil der Mikrolinsen als zweite Abbildungselemente vorgesehen sein. Der eine Teil der Mikrolinsen unterscheidet sich vom anderen Teil der Mikrolinsen wiederum hinsichtlich der Brennweite und/oder der Distanz vom Lichtempfänger.

Vorzugsweise sind die ersten und zweiten Abbildungselemente, d.h. die beiden Teilmengen der Mikrolinsen, gleichmäßig über das Mikrolinsenarray verteilt. Beispielsweise kann die Anordnung derart erfolgen, dass abwechselnd eine Mikrolinse mit einer ersten Brennweite und/oder ersten Distanz und eine Mikrolinse mit einer zweiten Brennweite und/oder zweiten Distanz auf dem Mikrolinsenarray angeordnet wird.

Alternativ umfasst jede Mikrolinse ein erstes und ein zweites Segment einer jeweiligen, eine optische Achse aufweisenden Sammellinse, wobei die Segmente derart zueinander angeordnet sind, dass ihre optischen Achsen einander zugewandt sind, insbesondere zusammenfallen, und wobei die ersten Segmente die ersten Abbildungselemente und die zweiten Segmente die zweiten Abbildungselemente bilden. Jede Mikrolinse kann also in der vorstehend erläuterten Weise aus geteilten Sammellinsen zusammengesetzt sein, wobei sich die jeweiligen Segmente einer Mikrolinse hinsichtlich ihrer Brennweiten und/oder der Distanz zum Lichtempfänger unterscheiden.

Es versteht sich, dass die Empfangsoptik, gleichgültig ob sie aus Segmenten zusammengesetzt oder als Mikrolinsenarray ausgebildet ist, auch durch eine einzige Linse oder ein einziges Element gebildet sein kann, welches die genannten Abbildungselemente in integraler Weise enthält. Eine solche integrale Empfangsoptik kann beispielsweise als Freiformlinse, als Stufenlinse oder als Fresnellinse hergestellt werden.

Weitere vorteilhafte Ausführungsformen der Erfindung sind in den Unteransprüchen, der Beschreibung und den Zeichnungen genannt.

Die Erfindung wird nachfolgend anhand von Ausführungsbeispielen mit Bezug auf die Zeichnung beschrieben. Es zeigen:
- Fig. 1: einen schematischen Strahlengang eines erfindungsgemäßen Triangulationslichttasters;
- Fig. 2: eine Empfangsoptik gemäß einem ersten Ausführungsbeispiel in Draufsicht und perspektivischer Ansicht;
- Fig. 3: eine Empfangsoptik gemäß einem zweiten Ausführungsbeispiel in perspektivischer Ansicht und Seitenansicht;
- Fig. 4: eine Empfangsoptik gemäß einem dritten Ausführungsbeispiel in perspektivischer Ansicht und Seitenansicht;
- Fig. 5: eine Empfangsoptik gemäß einem vierten Ausführungsbeispiel in Draufsicht und perspektivischer Ansicht;
- Fig. 6: eine Empfangsoptik gemäß einem fünften Ausführungsbeispiel in perspektivischer Ansicht;
- Fig. 7a - c: Teilausschnitte des Strahlengangs gemäß Fig. 1 für unterschiedliche Tastweiten;
- Fig. 8: ein Diagramm, welches die Lichtfleckposition auf dem Lichtempfänger in Abhängigkeit von der Tastweite darstellt; und
- Fig. 9: ein Diagramm, welches die Lichtfleckgröße in Abhängigkeit von der Tastweite darstellt.

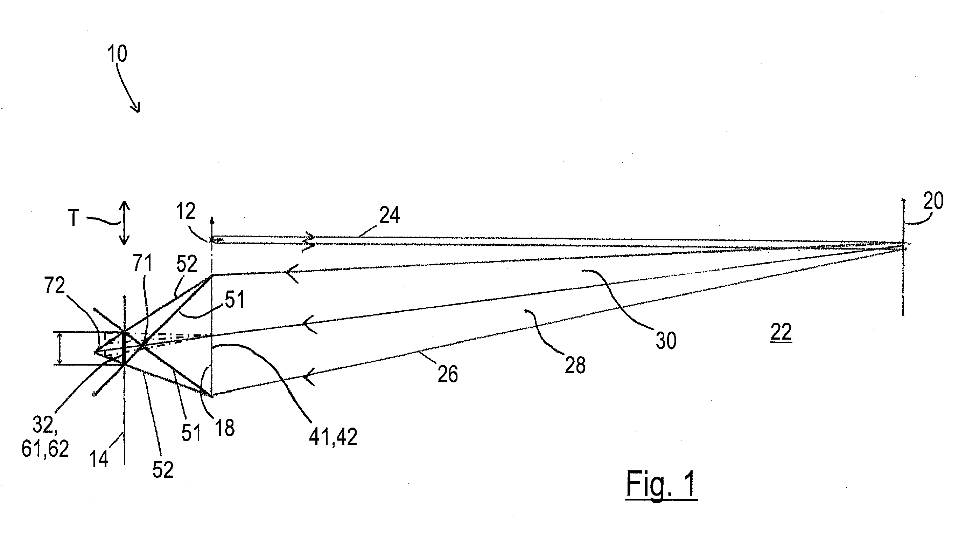

Fig. 1 zeigt den schematischen Strahlengang eines Triangulationslichttasters 10.

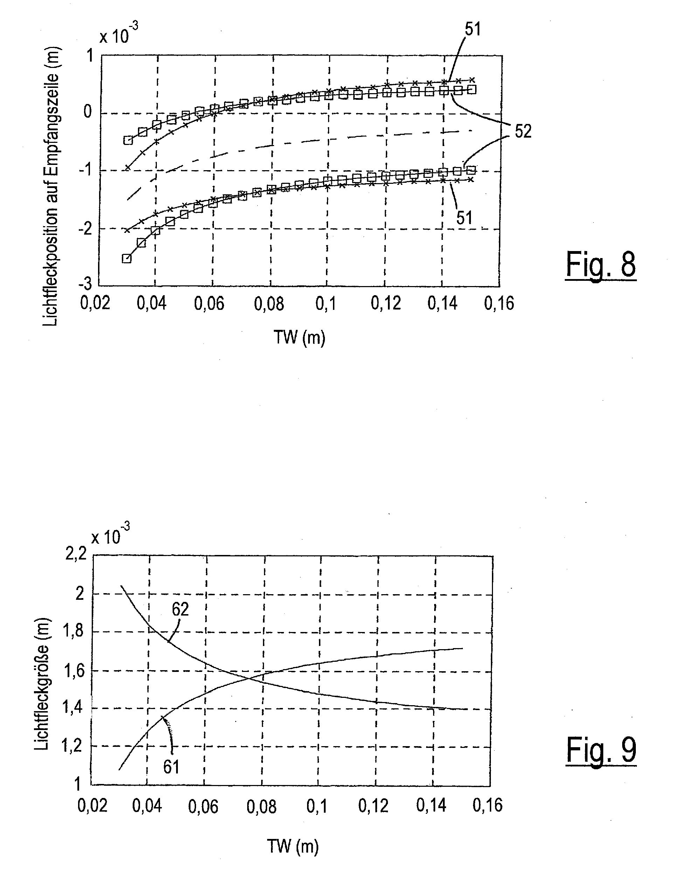

Von einem Lichtsender 12, z.B. einer Laserdiode, wird Sendelicht 24 in Richtung einer Detektionszone 22 ausgesendet. Das Sendelicht 24 trifft auf ein Objekt 20 in der Detektionszone 22 und wird von diesem Objekt 20 zum Triangulationslichttaster 10 remittiert. Das remittierte Licht 26 trifft auf eine Empfangsoptik 18 und wird von dieser auf einen Lichtempfänger 14 abgelenkt. Dieser Lichtempfänger 14 umfasst eine Anzahl von Fotodiodenelementen als Empfängerelemente, die in Triangulationsrichtung T nebeneinander angeordnet sind. Der Lichtempfänger 14 wird auch als Empfangszeile bezeichnet. Das Signal dieser Empfangszeile wird von einer Auswerteeinheit (nicht dargestellt) ausgewertet, die aus der Position des Schwerpunkts eines auf dem Lichtempfänger 14 ausgebildeten Lichtflecks 32 auf die Entfernung des Objekts 20 zurückschließen kann. Zwischen der Position des Schwerpunkts des Lichtflecks 32 auf dem Lichtempfänger 14 und der Entfernung des Objekts besteht ein eindeutiger geometrischer Zusammenhang, welcher in Fig. 8 durch die mittlere gestrichelte Linie repräsentiert wird.

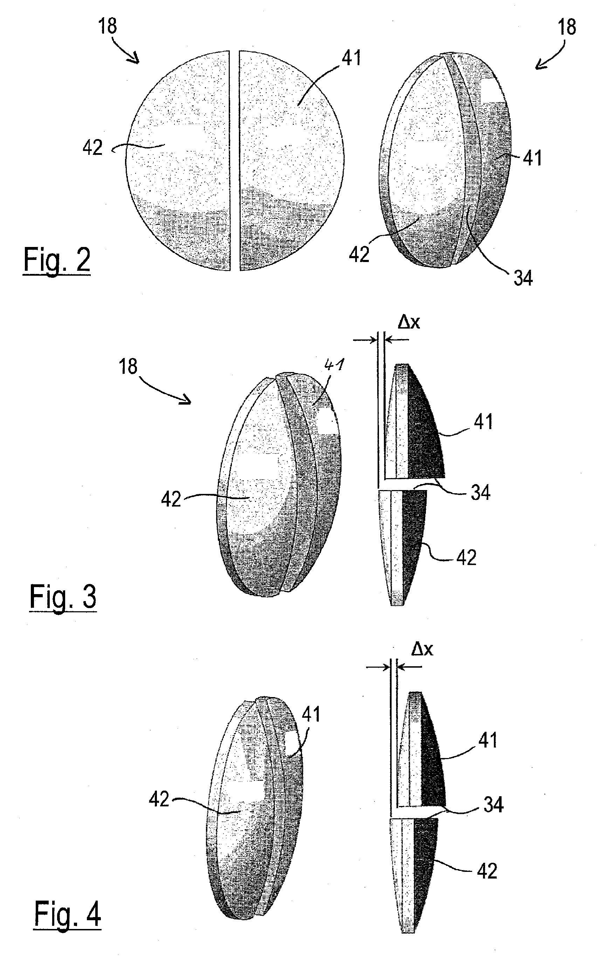

In Fig. 2 bis 6 sind fünf verschiedene Ausführungsbeispiele einer Empfangsoptik 18 dargestellt. Allen Ausführungsbeispielen ist gemeinsam, dass die Empfangsoptik 18 wenigstens ein erstes Abbildungselement 41 und wenigstens ein zweites Abbildungselement 42 umfasst. Das oder die Abbildungselemente 41 unterscheiden sich von dem oder den Abbildungselementen 42 hinsichtlich ihrer Brennweite und/oder ihrer Distanz zum Lichtempfänger 14.

Bei den ersten bis vierten Ausführungsbeispielen (Fig. 2 bis 5) entspricht jedes Abbildungselement 41, 42 einem Segment, welches vom Prinzip her durch Trennen oder Halbieren einer kreisförmigen Sammellinse erzeugt wurde, wobei die jeweiligen Trennflächen 34 entlang der optischen Achse der Sammellinse, d.h. quer zu einer Hauptebene der Sammellinse verlaufen. Die segmentförmigen Abbildungselemente 41, 42 sind so angeordnet, dass ihre jeweiligen Trennflächen 34 zueinander weisen, so dass auch die optischen Achsen der Abbildungselemente 41, 42 aneinander zugewandt sind oder sogar zusammenfallen. Die Abbildungselemente 41, 42 können - wie dargestellt - voneinander beabstandet sein oder auch unmittelbar aneinander anstoßen.

Bei der Empfangsoptik 18 gemäß dem ersten Ausführungsbeispiel (Fig. 2) und dem zweiten Ausführungsbeispiel (Fig. 3) weist das erste Abbildungselement 41 eine kleinere Brennweite auf als das zweite Abbildungselement 42.

Bei der Empfangsoptik 18 gemäß dem zweiten Ausführungsbeispiel (Fig. 3) und dem dritten Ausführungsbeispiel (Fig. 4) weisen die Abbildungselemente 41, 42 einen Versatz Δx in Richtung ihrer optischen Achsen auf, so dass die Abbildungselemente 41, 42 in unterschiedlicher Distanz zu dem Lichtempfänger 14 angeordnet sind.

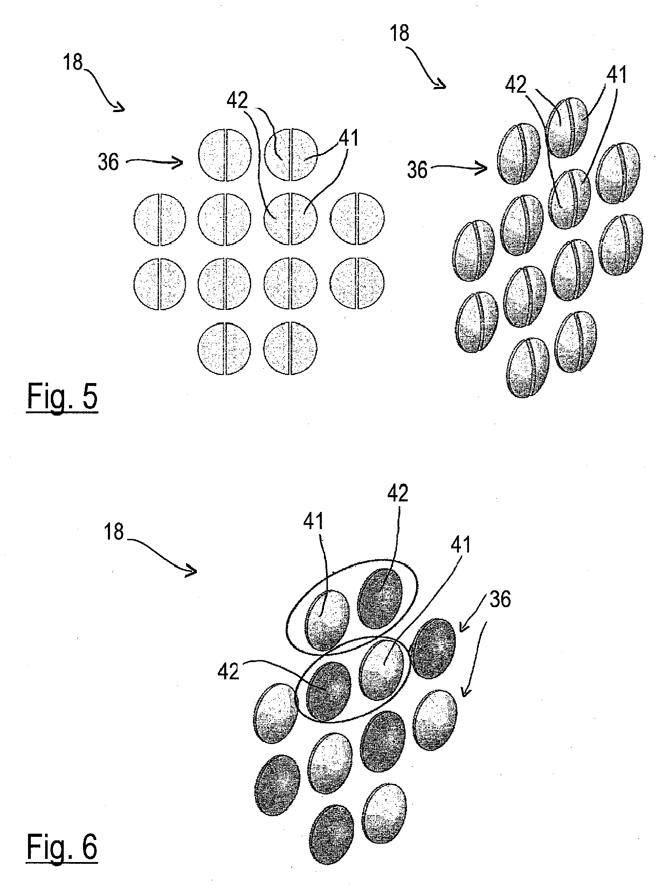

Die Empfangsoptik 18 gemäß dem vierten Ausführungsbeispiel (Fig. 5) und dem fünften Ausführungsbeispiel (Fig. 6) ist als Mikrolinsenarray mit einer Vielzahl von Mikrolinsen 36 ausgebildet.

Bei der Empfangsoptik 18 gemäß Fig. 5 umfasst jede Mikrolinse 36 ein erstes Segment oder Abbildungselement 41 und ein zweites Segment oder Abbildungselement 42, wobei die Segmente oder Abbildungselemente 41, 42 entsprechend den Abbildungselementen 41, 42 des ersten, zweiten oder dritten Ausführungsbeispiels (Fig. 2 - 4) ausgestaltet sein können, d.h. die Abbildungselemente 41, 42 unterscheiden sich hinsichtlich ihrer Brennweite und/oder ihrer Distanz zum Lichtempfänger 14.

Bei der Empfangsoptik 18 gemäß dem fünften Ausführungsbeispiel (Fig. 6) ist ein Teil der Mikrolinsen 36 als erste Abbildungselemente 41 und der andere Teil der Mikrolinsen 36 als zweite Abbildungselemente 42 ausgebildet, wobei abwechselnd ein erstes und ein zweites Abbildungselement 41, 42 vorgesehen ist. Die Abbildungselemente 41, 42 unterscheiden sich ebenfalls hinsichtlich ihrer Brennweite und/oder ihrer Distanz zum Lichtempfänger 14.

Bei allen fünf Ausführungsbeispielen können die Abbildungselemente 41, 42 bzw. die Empfangsoptik 18 als Ganzes grundsätzlich in jeder geeigneten Weise hergestellt sein, beispielsweise als diskrete Bauelemente, als Freiformlinse, als Stufenlinse oder als Fresnellinse bzw. durch entsprechende Abschnitte einer solchen Linse gebildet sein.

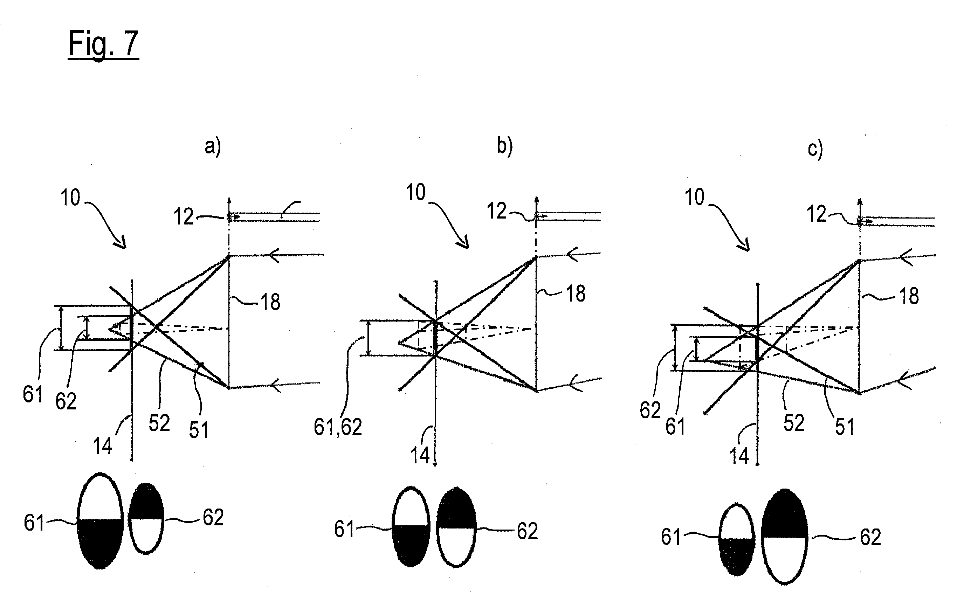

Die Funktionsweise des erfindungsgemäßen Triangulationslichttasters 10 wird nun mit Bezug auf Fig. 1 und 7 näher erläutert. Dabei wird davon ausgegangen, dass die Empfangsoptik 18 prinzipiell gemäß einem der vorstehend genannten Ausführungsbeispiele ausgestaltet ist, wobei die Brennweite des ersten Abbildungselements 41 kürzer als die Brennweite des zweiten Abbildungselements 42 ist, so dass das erste Abbildungselement 41 einen Teil des remittierten Lichts 26 in einen ersten Brennpunkt 71 fokussiert, der in Ausbreitungsrichtung des remittierten Lichts 26 betrachtet vor dem Lichtempfänger 14 liegt, und das zweite Abbildungselement 42 einen anderen Teil des remittierten Lichts 26 in einen zweiten, virtuellen Brennpunkt 72 fokussiert, der in Ausbreitungsrichtung des remittierten Lichts 26 betrachtet hinter dem Lichtempfänger 14 liegt. Die Brennweiten der Abbildungselemente 41, 42 sind dabei derart auf den zu erfassenden Tastweitenbereich ausgelegt, dass beide Abbildungselemente 41, 42 das remittierte Licht 26 stets etwas defokussiert auf den Lichtempfänger 14 lenken, so dass das Drei-Elemente-Kriterium zumindest für einen Großteil des Tastweitenbereichs erfüllt ist.

In den Fig. 1 und 7 sind jeweils die äußersten Empfangslichtstrahlen dargestellt, welche die Position des Lichtflecks 32 auf dem Lichtempfänger 14 umgrenzen. Dem ersten Abbildungselement 41 sind erste Empfangslichtstrahlen 51 zugeordnet, welche einen ersten Teillichtfleck 61 umgrenzen. Entsprechend sind dem zweiten Abbildungselement 42 zweite Empfangslichtstrahlen 52 zugeordnet, welche einen zweiten Teillichtfleck 62 umgrenzen.

Wie in Fig. 7a bis c gut zu erkennen ist, können die Teillichtflecke 61, 62 aufgrund der Defokussierung unterschiedliche Querschnitte in Abhängigkeit von der Tastweite, d.h. der Entfernung des Objekts 20 von dem Triangulationslichttaster 10, aufweisen. Bei der Situation gemäß Fig. 1 und Fig. 7b weisen beide Teillichtflecke 61, 62 die gleiche Größe auf. Wenn - wie in Fig. 7a dargestellt - die Tastweite größer ist als im Fall gemäß Fig. 7b, ist der zweite Teillichtfleck 62 kleiner als der erste Teillichtfleck 61. Wenn - wie in Fig. 7c dargestellt - die Tastweite jedoch kleiner ist als im Fall gemäß Fig. 7b, ist der zweite Teillichtfleck 62 größer als der erste Teillichtfleck 61.

Nachfolgend wird nun näher erläutert, wie sich ein im Bereich des Auftrefforts des Sendelichts 24 vorhandener, in Triangulationsrichtung T verlaufender Kontrastunterschied des Objekts 20 auswirkt. Es sei vereinfacht angenommen, dass dieser Kontrastunterschied sich derart auswirkt, dass das remittierte Licht 26 ein Lichtbündel 28 mit hoher Intensität und ein Lichtbündel 30 mit geringer Intensität umfasst (Fig. 1).

Anhand der Empfangslichtstrahlen 51, 52 ist nachzuvollziehen, dass das erste Abbildungselement 41 das Lichtbündel 28 in den oberen Teil des Teillichtflecks 61 abbildet, während das zweite Abbildungselement 42 das intensitätsschwächere Lichtbündel 30 in den unteren Teil des Teillichtflecks 61 abbildet. Es sei angemerkt, dass sich die Richtungsangaben "oben" und "unten" auf die Zeichnungsebene von Fig. 7 beziehen. Bei dem durch das zweite Abbildungselement 42 erzeugten Teillichtfleck 62 verhält es sich genau umgekehrt, so dass das intensitätsstarke Lichtbündel 28 in den unteren Teil des Teillichtflecks 62 und das intensitätsschwache Lichtbündel 30 in den oberen Teil des Teillichtflecks 62 abgebildet wird. In Fig. 7 repräsentieren somit die hellen Flächen der Teillichtflecke 61, 62 Bereiche hoher Lichtintensität und die dunklen Flächen Bereiche niedriger Lichtintensität.

Auf dem Lichtempfänger 14 ergänzen sich die Teillichtflecke 61, 62, die in den unteren Teilen von Fig. 7 der Übersichtlichkeit halber in schematischer Weise nebeneinander dargestellt sind, zu einem Lichtfleck 32 oder Gesamtlichtfleck, wobei sich die Teillichtflecke 61, 62 quer zur Triangulationsrichtung T betrachtet vollständig oder teilweise überlagern oder auch beabstandet oder unmittelbar aneinander angrenzen können, so dass die Kontrastunterschiede auf dem Objekt 20 aufgrund der Spiegelung eines der Teillichtflecke 61, 62 in Abhängigkeit von der Tastweite vollständig oder zumindest zu einem großen Teil kompensiert werden.

In dem Diagramm von Fig. 8 ist die Position des Lichtflecks 32 bzw. der Teillichtflecke 61, 62 auf dem Lichtempfänger in Abhängigkeit von der Tastweite (TW) dargestellt, wobei die Positionen der äußersten Empfangslichtstrahlen 51, 52 durch durchgezogene Linien repräsentiert sind und die gestrichelte Linie als Symmetrielinie die Position des Schwerpunkts des Lichtflecks 32 repräsentiert. Die kreuzförmigen Symbole repräsentieren hierbei die durch das kurzbrennweitige erste Abbildungselement 41 erzeugten Empfangslichtstrahlen 51, während die quadratischen Symbole die durch das langbrennweitige zweite Abbildungselement 42 erzeugten Empfangslichtstrahlen 52 repräsentieren.

Im Diagramm von Fig. 9 ist die Größe der Teillichtflecke 61 bzw. 62 für ein Konfigurationsbeispiel gegen die Tastweite aufgetragen. Demnach weisen bei der gegebenen Konfiguration des Lichttasters 10 die Lichtflecke 61, 62 bei einer Tastweite von 7,5 cm die gleiche Größe auf. Entsprechend der Darstellung von Fig. 7 ist der Teillichtfleck 62 bei Tastweiten kleiner 7,5 cm größer und bei Tastweiten größer 7,5 cm kleiner als der Teillichtfleck 61.

### Bezugszeichenliste

- 10: Triangulationslichttaster
- 12: Lichtsender
- 14: Lichtempfänger
- 18: Empfangsoptik
- 20: Objekt
- 22: Detektionszone
- 24: Sendelicht
- 26: remittiertes Licht
- 28, 30: Lichtbündel
- 32: Lichtfleck
- 34: Trennfläche
- 36: Mikrolinse
- 41: erstes Abbildungselement
- 42: zweites Abbildungselement
- 51: erster Empfangslichtstrahl
- 52: zweiter Empfangslichtstrahl
- 61: erster Teillichtfleck
- 62: zweiter Teillichtfleck
- 71: erster Brennpunkt
- 72: zweiter Brennpunkt

- T: Triangulationsrichtung
- Δx: Versatz

## Patentansprüche

1. Triangulationslichttaster (10) mit
- wenigstens einem Lichtsender (12) zum Aussenden von Sendelicht (24) in eine Detektionszone (22),
- einem Lichtempfänger (14), welcher mehrere Empfängerelemente aufweist, zum Empfangen von Licht (26, 28, 30) aus der Detektionszone (22), welches von einem zu detektierenden Objekt (20) remittiert wird, und
- einer Empfangsoptik (18), die im Strahlengang zwischen Detektionszone und Lichtempfänger (14) angeordnet ist,
wobei sich die Position eines mittels der Empfangsoptik aus dem remittierten Licht (26, 28, 30) auf dem Lichtempfänger (14) erzeugten Lichtflecks (32) in einer Triangulationsrichtung (T) in Abhängigkeit von der Entfernung des Objekts (20) ergibt,
**dadurch gekennzeichnet,**
**dass** die Empfangsoptik (18) wenigstens ein erstes und wenigstens ein zweites Abbildungselement (41, 42) umfasst,
wobei jedes Abbildungselement (41, 42) eine jeweilige Brennweite aufweist und in einer jeweiligen Distanz von dem Lichtempfänger (14) angeordnet ist,
wobei jedes Abbildungselement (41, 42) einen Teil des remittierten Lichts (26, 28, 30) in einen jeweiligen Brennpunkt (71, 72) fokussiert, und
wobei die Brennweiten und/oder die Distanzen derart gewählt sind, dass der Lichtempfänger (14) in der Ausbreitungsrichtung des remittierten Lichts (26, 28, 30) betrachtet zumindest dann zwischen den Brennpunkten (71, 72) gelegen ist, wenn sich das Objekt (20) innerhalb eines vorgegebenen Entfernungsbereichs befindet.

2. Triangulationslichttaster nach Anspruch 1,
**dadurch gekennzeichnet,**
**dass** die ersten und zweiten Abbildungselemente (41, 42) in einer quer zur Triangulationsrichtung (T) verlaufenden Richtung nebeneinander angeordnet sind.

3. Triangulationslichttaster nach Anspruch 1 oder 2,
**dadurch gekennzeichnet,**
**dass** die Brennweiten und/oder die Distanzen derart gewählt sind, dass zumindest einer der von einem jeweiligen Abbildungselement (41, 42) erzeugten Teillichtflecke (61, 62) wenigstens drei Empfängerelemente überdeckt, wenn sich das Objekt (20) innerhalb des vorgegebenen Entfernungsbereichs befindet.

4. Triangulationslichttaster nach einem der vorhergehenden Ansprüche,
**dadurch gekennzeichnet,**
**dass** jedes Abbildungselement (41, 42) durch ein jeweiliges Segment einer eine optische Achse aufweisenden Sammellinse gebildet ist, wobei die Segmente derart zueinander angeordnet sind, dass ihre optischen Achsen einander zugewandt sind, insbesondere zusammenfallen.

5. Triangulationslichttaster nach einem der Ansprüche 1 bis 3, **dadurch gekennzeichnet,**
**dass** die Empfangsoptik (18) ein Mikrolinsenarray mit einer Vielzahl von Mikrolinsen (36) umfasst.

6. Triangulationslichttaster nach Anspruch 5,
**dadurch gekennzeichnet,**
**dass** ein Teil der Mikrolinsen (36) als erste Abbildungselemente (41) und ein anderer Teil der Mikrolinsen (36) als zweite Abbildungselemente (42) vorgesehen sind.

7. Triangulationslichttaster nach Anspruch 6,
**dadurch gekennzeichnet,**
**dass** die ersten und zweiten Abbildungselemente (41, 42) gleichmäßig über das Mikrolinsenarray verteilt sind.

8. Triangulationslichttaster nach Anspruch 5,
**dadurch gekennzeichnet,**
**dass** jede Mikrolinse (38) ein erstes und ein zweites Segment einer jeweiligen, eine optische Achse aufweisenden Sammellinse umfasst, wobei die Segmente derart zueinander angeordnet sind, dass ihre optischen Achsen einander zugewandt sind, insbesondere zusammenfallen, und wobei die ersten Segmente die ersten Abbildungselemente (41) und die zweiten Segmente die zweiten Abbildungselemente (42) bilden.

## Geänderte Patentansprüche

### Geänderte Patentansprüche gemäss Regel 137(2) EPÜ.

**1.** Triangulationslichttaster (10) mit
- wenigstens einem Lichtsender (12) zum Aussenden von Sendelicht (24) in eine Detektionszone (22),
- einem Lichtempfänger (14), welcher mehrere Empfängerelemente aufweist, zum Empfangen von Licht (26, 28, 30) aus der Detektionszone (22), welches von einem zu detektierenden Objekt (20) remittiert wird, und
- einer Empfangsoptik (18), die im Strahlengang zwischen Detektionszone und Lichtempfänger (14) angeordnet ist,
wobei sich die Position eines mittels der Empfangsoptik aus dem remittierten Licht (26, 28, 30) auf dem Lichtempfänger (14) erzeugten Lichtflecks (32) in einer Triangulationsrichtung (T) in Abhängigkeit von der Entfernung des Objekts (20) ergibt, und
wobei die Empfangsoptik (18) wenigstens ein erstes und wenigstens ein zweites Abbildungselement (41, 42) umfasst,
**dadurch gekennzeichnet, dass**
die Abbildungselemente (41, 42) eine derartige jeweilige Brennweite aufweisen und/oder in einer derartigen jeweiligen Distanz zum Lichtempfänger (14) angeordnet sind, dass jedes Abbildungselement (41, 42) einen Teil des remittierten Lichts (26, 28, 30) in einen jeweiligen Brennpunkt (71, 72) fokussiert, wobei der Lichtempfänger (14) in der Ausbreitungsrichtung des remittierten Lichts (26, 28, 30) betrachtet zumindest dann zwischen diesen Brennpunkten (71, 72) gelegen ist,
wenn sich das Objekt (20) innerhalb eines vorgegebenen Entfernungsbereichs befindet.
